# EUROPEAN PATENT APPLICATION

(11) **EP 4 848 684 A1**
(43) Date of publication of application: **02.12.2026**
(21) Application number: 24928076.9
(22) Date of filing: 29.09.2024
(51) Int. Cl.: H04L 45/745

(54) **ROUTING ADVERTISEMENT METHOD, PACKET FORWARDING METHOD, STORAGE MEDIUM, AND ELECTRONIC APPARATUS**

(30) Priority: 06.03.2024 CN 202410256447
(71) Applicant: ZTE CORPORATION, Shenzhen, Guangdong 518057 (CN)
(72) Inventor: LIU, Yao, Shenzhen, Guangdong 518057 (CN); ZHANG, Zheng, Shenzhen, Guangdong 518057 (CN)
(74) Representative: Chimini, Francesco
(86) International application number: PCT/CN2024/122483
(87) International publication number: WO 2025/185145

(57) **Abstract**

Provided are a method for route advertisement and a method for packet forwarding, a storage medium and an electronic device. A second spine node device receives routing information from a first spine node device in a first group; and the second spine node device performs route advertisement to a second leaf node device in a second group according to the routing information. The problems in the related art of high deployment cost and lack of an automatic forwarding mechanism in a dragonfly plus network are solved, and the effects of reducing the deployment cost of the dragonfly plus network and implementing an automatic forwarding mechanism are achieved.

## Description

### Cross-Reference to Related Application

The present disclosure is based on and claims the benefit of priority of Chinese Patent Application No. CN202410256447.9 filed on March 06, 2024 and entitled "Method for Route Advertisement and Method for Packet Forwarding, Storage Medium and Electronic Device", the disclosure of which is incorporated herein by reference in its entirety.

### Technical Field

Embodiments of the present disclosure relate to the field of communications, and in particular, to a method for route advertisement and a method for packet forwarding, a storage medium and an electronic device.

### Background

Forwarding in a dragonfly plus network generally adopts an adaptive routing approach, that is, dynamically selecting one or more forwarding paths according to certain rules. One possible result is that traffic is load-balanced among multiple shortest paths and non-shortest paths, rather than the shortest path first approach commonly used in existing routing protocols.

In existing solutions, a common approach is to let leaf nodes directly learn all routes and then make forwarding decisions. The disadvantage of this approach is that when the network scale is large, leaf nodes need to maintain a very large number of forwarding table entries, and in order not to affect forwarding performance, leaf nodes also need to use devices with higher performance, resulting in high networking cost. In addition, current configuration solutions based on BGP+VRF require complex routing rule configuration, and have poor availability in large-scale networks.

In the related art, dragonfly/dragonfly plus networks lack an automatic forwarding mechanism based on distributed routing, and when the network scale is large, leaf nodes need to maintain a large number of detailed routing tables, which imposes a heavy burden on the devices and is not conducive to reducing deployment costs.

### Summary

The embodiments of the present disclosure provide a method for route advertisement and a method for packet forwarding, a storage medium and an electronic device, so as to at least solve the problems in the related art of high deployment cost and lack of an automatic forwarding mechanism in a dragonfly plus network.

According to one embodiment of the present disclosure, a method for route advertisement is provided, used in a dragonfly plus network, including: receiving, by a second spine node device, routing information from a first spine node device in a first group; and performing, by the second spine node device, route advertisement to a second leaf node device in a second group according to the routing information.

According to another embodiment of the present disclosure, a method for packet forwarding is provided, including: receiving, by a leaf node device, a data packet, and determining, according to a destination prefix address in the data packet, whether the data packet is a cross-group data packet; and in response to the data packet requiring cross-group forwarding, forwarding, by the leaf node device, the data packet to a destination spine node device according to a locally stored forwarding path table entry.

According to yet another embodiment of the present disclosure, a computer-readable storage medium is further provided, the computer-readable storage medium having a computer program stored therein, wherein the computer program is configured to, when running, execute steps in the method according to any one of the above method embodiments.

According to yet another embodiment of the present disclosure, an electronic device is further provided, including a memory and a processor, the memory having a computer program stored therein, the processor being configured to run the computer program to execute the method according to any one of the above method embodiments.

### Brief Description of the Drawings

Fig. 1 is a schematic diagram of a compact dragonfly plus topology in the related art;
Fig. 2 is a schematic diagram of a loose dragonfly plus topology in the related art;
Fig. 3 is a hardware structure block diagram of a mobile terminal for a method for route advertisement according to the embodiments of the present disclosure;
Fig. 4 is a first flowchart of a method for route advertisement according to the embodiments of the present disclosure;
Fig. 5 is a second flowchart of a method for route advertisement according to the embodiments of the present disclosure;
Fig. 6 is a third flowchart of a method for route advertisement according to the embodiments of the present disclosure;
Fig. 7 is a fourth flowchart of a method for route advertisement according to the embodiments of the present disclosure;
Fig. 8 is a fifth flowchart of a method for route advertisement according to the embodiments of the present disclosure;
Fig. 9 is a sixth flowchart of a method for route advertisement according to the embodiments of the present disclosure;
Fig. 10 is a first flowchart of a method for packet forwarding according to the embodiments of the present disclosure;
Fig. 11 is a second flowchart of a method for packet forwarding according to the embodiments of the present disclosure;
Fig. 12 is a flowchart of a method for route advertisement according to Embodiment 1 of the present disclosure;
Fig. 13 is a flowchart of a method for packet forwarding according to Embodiment 1 of the present disclosure;
Fig. 14 is a flowchart of a method for route advertisement according to Embodiment 2 of the present disclosure;
Fig. 15 is a flowchart of a method for packet forwarding according to Embodiment 2 of the present disclosure;
Fig. 16 is a flowchart of a method for route advertisement according to Embodiment 3 of the present disclosure;
Fig. 17 is a schematic diagram of a service networking of a dragonfly plus network according to Embodiment 4 of the present disclosure;
Fig. 18 is a flowchart of a method for packet forwarding according to Embodiment 4 of the present disclosure;
Fig. 19 is a schematic diagram of a service networking of a dragonfly plus network according to Embodiment 5 of the present disclosure;
Fig. 20 is a flowchart of a method for route advertisement according to Embodiment 6 of the present disclosure.

### Detailed Description of the Embodiments

The embodiments of the present disclosure will be described in detail below with reference to the accompanying drawings and in conjunction with the embodiments.

It should be noted that the terms "first," "second," etc., in the specification and claims of the present disclosure and the above-mentioned drawings are used to distinguish similar objects, and are not necessarily used to describe a particular order or sequence.

A dragonfly network is a commonly used efficient communication system in the field of High Performance Computing (HPC). Compared with networking topologies such as Clos and Fat Tree networks, a dragonfly network has the characteristics of short communication diameter, low latency, and large networking scale, and can achieve low-latency and high-throughput communication. The structure of a dragonfly topology has three levels: a Router level (also referred to as a Switch level), a Group level (also referred to as a device group), and a System level.

Switch level: includes a switch and p compute nodes/servers connected thereto.

Group level: includes *a* Switch levels, and *a* switches of the *a* Switch levels may be fully connected (All-to-all). In dragonfly plus, connections within a Group adopt connection modes such as Clos/spine-leaf/Fat Tree.

System level: includes *g* Group levels, and the *g* Group levels are fully connected.

Dragonfly plus (dragonfly+, DF+ for short) is an evolution of the DF topology, and the main difference from DF is that the group adopts a topology structure similar to Clos/Fat Tree. In current AI data center network technologies, new topologies and routing protocols are also being explored, and the dragonfly+ network is one of the alternative topologies.

In the embodiments of the present disclosure, devices in a dragonfly+ network that are connected to servers/service providers and do not participate in inter-Group interconnection are referred to as leaf devices, and devices that participate in inter-Group interconnection are referred to as top-level spine devices. For Clos/Fat Tree topologies with more than two levels, there are also intermediate devices in the middle level that connect leaf devices and spine devices, i.e., intermediate spine devices. In the present disclosure, unless otherwise specified, spine devices refer to top-level spine devices. In the embodiments of the present disclosure, unless otherwise specified, dragonfly networks refer to dragonfly plus/dragonfly+ networks.

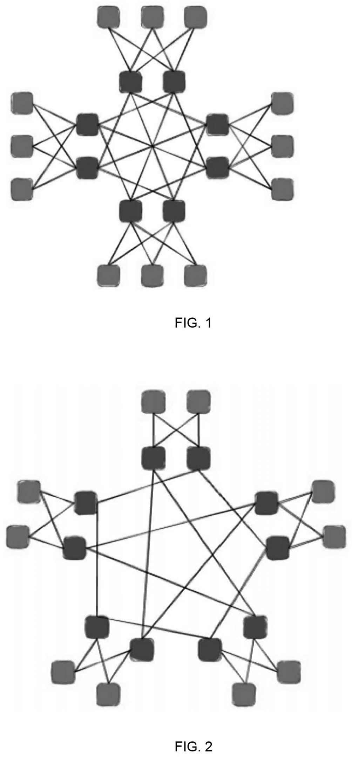

Dragonfly topologies are further divided into loose and compact types, depending on the connection mode between Groups, i.e., whether each spine in each Group is connected to all other Groups. FIG. 1 is a schematic diagram of a compact dragonfly plus topology in the related art. FIG. 2 is a schematic diagram of a loose dragonfly plus topology in the related art. In order to support a larger networking scale under the same hardware conditions, the loose type is a more practical connection mode.

Forwarding in a dragonfly network is divided into two types: Minimal Routing, i.e., a packet is forwarded directly from a source Group to a destination Group, and Non-Minimal Routing, in which a packet reaches the destination Group via an intermediate Group. In the related art, dragonfly/ dragonfly+ networks lack an automatic forwarding mechanism based on distributed routing, and when the network scale is large, leaf nodes need to maintain a large number of detailed routing tables, which imposes a heavy burden on the devices and is not conducive to reducing deployment costs.

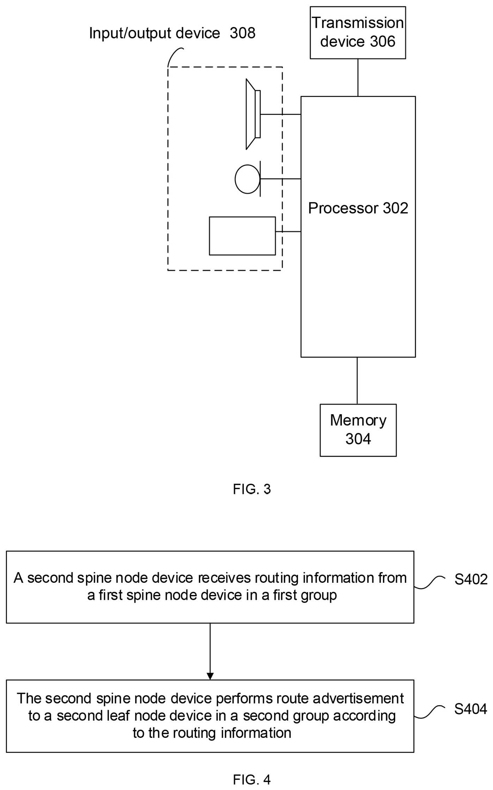

The method embodiments provided in the embodiments of the present disclosure may be executed in a mobile terminal, a computer terminal, or a similar computing device. Taking execution on a mobile terminal as an example, FIG. 3 is a hardware structure block diagram of a mobile terminal for a method for route advertisement according to the embodiments of the present disclosure. As shown in FIG. 3, the mobile terminal may include one or more (only one is shown in FIG. 3) processors 302 (the processors 302 may include but are not limited to processing devices such as a microprocessor MCU or a programmable logic device FPGA) and a memory 304 for storing data, wherein the mobile terminal may further include a transmission device 306 for communication functions and an input/output device 308. Those of ordinary skill in the art will appreciate that the structure shown in FIG. 3 is merely illustrative, and does not limit the structure of the mobile terminal. For example, the mobile terminal may also include more or fewer components than those shown in FIG. 3, or have a configuration different from that shown in FIG. 3.

The memory 304 may be used to store computer programs, for example, software programs and modules of application software, such as computer programs corresponding to a method for route advertisement in the embodiments of the present disclosure, and the processor 302 executes various functional applications and data processing, i.e., implements the above-mentioned methods, by running the computer programs stored in the memory 304. The memory 304 may include highspeed random access memory, and may also include non-volatile memory, such as one or more magnetic storage devices, flash memory, or other non-volatile solid-state memory. In some examples, the memory 304 may further include memories provided remotely relative to the processor 302, and these remote memories may be connected to the mobile terminal via a network. Examples of the above-mentioned network include, but are not limited to, the Internet, an intranet, a local area network, a mobile communication network, and combinations thereof.

The transmission device 306 is configured to receive or send data via a network. A specific example of the above-mentioned network may include a wireless network provided by a communication provider of the mobile terminal. In one example, the transmission device 306 includes a Network Interface Controller (NIC), which may be connected to other network devices via a base station so as to communicate with the Internet. In one example, the transmission device 306 may be a Radio Frequency (RF) module, which is used to communicate with the Internet wirelessly.

In the embodiments of the present disclosure, in order to distinguish the processes and steps of route advertisement and packet forwarding, in the description, the dragonfly network is divided into two groups, namely a first group and a second group, the first group includes a first spine node device and a first leaf node device, and the second group includes a second spine node device and a second leaf node device. It should be noted that the division of the above-mentioned first and second is only for distinguishing purposes, and is not a specific limitation or definition. In actual implementation, the dragonfly network includes multiple groups of devices, and each group also includes multiple spine node devices and multiple leaf node devices.

The embodiments of the present disclosure provide a method for route advertisement. FIG. 4 is a first flowchart of a method for route advertisement according to the embodiments of the present disclosure. As shown in FIG. 4, the process includes the following steps.

Step S402: a second spine node device receives routing information from a first spine node device in a first group.

Step S404: the second spine node device performs route advertisement to a second leaf node device in a second group according to the routing information.

In the embodiments of the present disclosure, for groups, the restrictions of first and second are only for distinguishing different groups. For spine node devices and leaf node devices, they are also only for distinguishing spine node devices or leaf node devices of different groups.

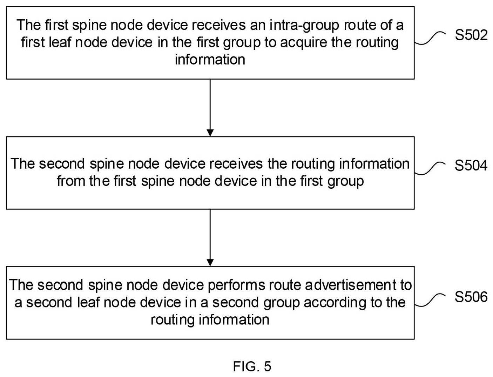

In an exemplary implementation, before the second spine node device receives the routing information from the first spine node device in the first group, the method further includes: the first spine node device receives an intra-group route of a first leaf node device in the first group to acquire the routing information. FIG. 5 is a second flowchart of a method for route advertisement according to the embodiments of the present disclosure. As shown in FIG. 5, the process includes the following steps.

Step S502: the first spine node device receives an intra-group route of a first leaf node device in the first group to acquire the routing information.

Step S504: the second spine node device receives the routing information from the first spine node device in the first group.

Step S506: the second spine node device performs route advertisement to a second leaf node device in a second group according to the routing information.

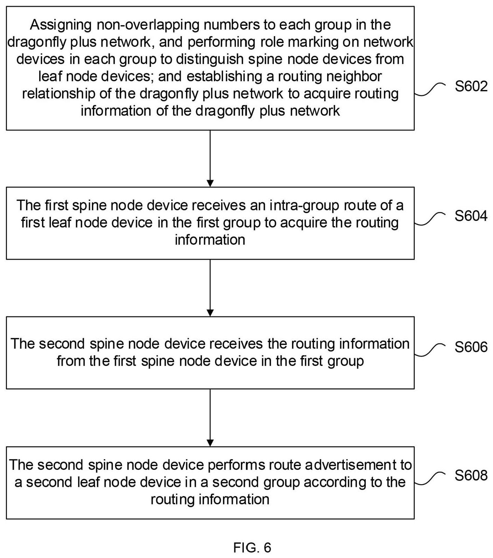

In an exemplary implementation, before the second spine node device receives the routing information from the first spine node device in the first group, the method further includes: assigning non-overlapping numbers to each group in the dragonfly plus network, and performing role marking on network devices in each group to distinguish spine node devices from leaf node devices; and establishing a routing neighbor relationship of the dragonfly plus network to acquire routing information of the dragonfly plus network. FIG. 6 is a third flowchart of a method for route advertisement according to the embodiments of the present disclosure. As shown in FIG. 6, the process includes the following steps.

Step S602: assigning non-overlapping numbers to each group in the dragonfly plus network, and performing role marking on network devices in each group to distinguish spine node devices from leaf node devices; and establishing a routing neighbor relationship of the dragonfly plus network to acquire routing information of the dragonfly plus network.

In the embodiments of the present disclosure, establishing routing neighbors includes: establishing neighbors between each spine node device in a group and leaf node devices in the group; establishing neighbors between spine node devices between groups; and during the interaction of neighbor establishment messages between groups, each spine node device carries its respective group identifier.

In an exemplary implementation, the manner of performing role marking on the network devices in each group includes at least one of: configuring, in an Open Shortest Path First (OSPF) protocol, different area numbers for the spine node devices and the leaf node devices; configuring, in an Intermediate System to Intermediate System (IS-IS) routing protocol, different level numbers for the spine node devices and the leaf node devices; and configuring, in a Routing in Fat Trees (RIFT) protocol, different level numbers for the spine node devices and the leaf node devices.

In an exemplary implementation, the routing neighbor relationship at least includes: an intra-group routing neighbor relationship between a spine node device and a leaf node device in a same group; and a routing neighbor relationship between spine node devices in different groups.

In an exemplary implementation, interactive information for establishing the routing neighbor relationship of the dragonfly plus network at least includes at least one of: group identification information of each of the spine node devices of different groups; and route mode support capability information of the dragonfly plus network of each of the spine node devices of different groups.

Step S604: the first spine node device receives an intra-group route of a first leaf node device in the first group to acquire the routing information.

Step S606: the second spine node device receives the routing information from the first spine node device in the first group.

Step S608: the second spine node device performs route advertisement to a second leaf node device in a second group according to the routing information.

In an exemplary implementation, performing, by the second spine node device, route advertisement to the second leaf node device in the second group according to the routing information includes: acquiring, by the second spine node device, forwarding path information of a destination address according to the routing information, and selecting available path information; and performing, by the second spine node device, route advertisement to a leaf node device in the second group according to the available path information, to complete intra-group route advertisement in the second group.

In the embodiments of the present disclosure, when a leaf node device performs intra-group route advertisement, it may modify the next hop to the address of the present device. In one embodiment, it may simultaneously carry its own group ID information; it may also carry the access/affiliation device of the destination prefix, that is, the group ID information of the leaf node device that advertises the destination prefix.

In an exemplary implementation, the intra-group route advertisement includes at least one of: destination prefix information; route metric/cost information; node address information of a next-hop spine node device; group identification information of the second spine node device; and group identification information of a group to which a leaf node device corresponding to a destination prefix belongs.

In an exemplary implementation, performing, by the second spine node device, route advertisement to the leaf node device in the second group according to the available path information includes: in response to a plurality of the second spine node devices performing route advertisement of a same target prefix to a same leaf node device, receiving and storing, by the leaf node device, a plurality of pieces of the available path information.

In an exemplary implementation, after step S608, in which the second spine node device performs route advertisement to the second leaf node device in the second group according to the routing information, the method further includes: in response to a path state to a destination prefix changing, updating routing information of the second leaf node device in the second group.

In an exemplary implementation, the path state to the destination prefix changing includes at least one of: all forwarding path information of the second spine node device to the destination prefix does not satisfy availability conditions; the second spine node device has a newly added route advertisement path, and a route metric/cost of the newly added route advertisement path is minimal; and forwarding path information corresponding to a minimal route metric/cost of the second spine node device is unavailable.

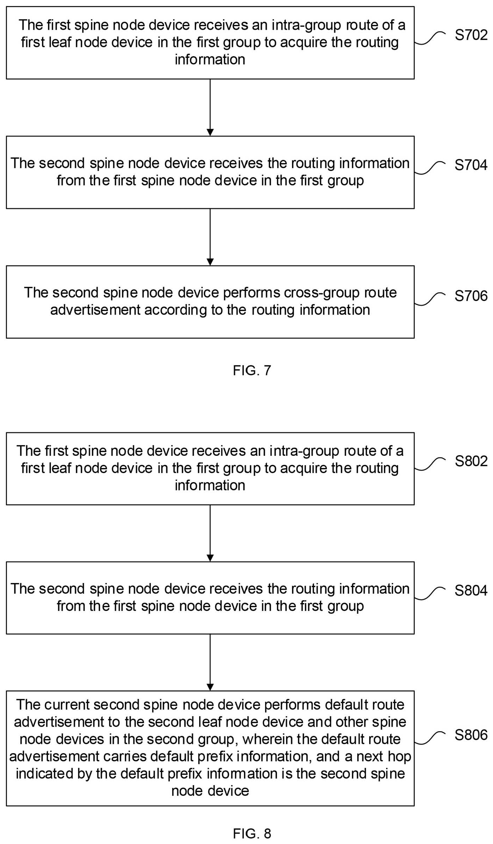

In an exemplary implementation, after the second spine node device receives the routing information from the first spine node device in the first group, the method further includes: performing, by the second spine node device, cross-group route advertisement according to the routing information. FIG. 7 is a fourth flowchart of the method for route advertisement according to the embodiments of the present disclosure. As shown in FIG. 7, the process includes the following steps.

Step S702: the first spine node device receives an intra-group route of a first leaf node device in the first group to acquire the routing information.

Step S704: the second spine node device receives the routing information from the first spine node device in the first group.

Step S706: the second spine node device performs cross-group route advertisement according to the routing information.

In an exemplary implementation, performing, by the second spine node device, the cross-group route advertisement according to the routing information in step S706 includes: sending, by the second spine node device, a cross-group route advertisement to other neighboring spine node devices except the first spine node device, wherein the cross-group route advertisement carries a next-hop address, and the next-hop address is an address of the corresponding second spine node device.

In an exemplary implementation, the cross-group route advertisement further carries group identification information of a group to which a leaf node device of a destination prefix belongs.

In an exemplary implementation, the cross-group route advertisement further carries group identification information of the second spine node device.

In one embodiment, the spine node device outside the group, i.e., the second spine node device, during route advertisement, further needs to carry path quality information in the route advertisement information, expressed in forms such as metric/cost, and the meaning of the path quality information includes but is not limited to routing distance, bandwidth, delay, etc., and the information is accumulated as the routing message is transmitted.

In an exemplary implementation, a number of transit hops of the cross-group route advertisement is one hop.

In one embodiment, in order to reduce the amount of inter-group routing, it may be required to control the route when forwarding the route to other spine node devices, limiting the number of transit hops of the route to one hop.

In one embodiment, the manner of limiting the number of transit hops to one hop includes: carrying a field in the routing packet to record the number of hops of route reflection, and limiting the route reflection to 1 hop; when a spine node device receives a routing protocol packet sent by another spine node device, it first checks the field, and if the route has not been reflected and the spine node device has neighbors other than the sending spine node device, the route is reflected; if a packet with a reflection hop count of 1 is received, the route is only received and not reflected; if a packet with a hop count exceeding 1 hop is received, it is discarded. The field reflecting the number of route hops may be a mandatory field, or may be carried only after the route has been reflected.

In an exemplary implementation, the cross-group route advertisement carries a preset field, wherein the preset field is used for limiting the number of transit hops of the transit route to one hop.

In an exemplary implementation, after the second spine node device receives the routing information from the first spine node device in the first group, the method further includes: performing, by the current second spine node device, default route advertisement to the second leaf node device and other spine node devices in the second group, wherein the default route advertisement carries default prefix information, and a next hop indicated by the default prefix information is the second spine node device. FIG. 8 is a fifth flowchart of the method for route advertisement according to the embodiments of the present disclosure. As shown in FIG. 8, the process includes the following steps.

Step S802: the first spine node device receives an intra-group route of a first leaf node device in the first group to acquire the routing information.

Step S804: the second spine node device receives the routing information from the first spine node device in the first group.

In the embodiments of the present disclosure, in a case where the roles of spine node devices are non-uniform, for example, when going to a certain destination, some spine node devices have shortest paths while some spine node devices only have non-shortest paths, if only default routes are advertised southbound, a leaf node device may select a spine node device going to a non-shortest path when selecting a path, making the path non-optimal. Therefore, in such a case, it is necessary to distinguish optimal spine node devices from non-optimal spine node devices during route advertisement.

Step S806: the current second spine node device performs default route advertisement to the second leaf node device and other spine node devices in the second group, wherein the default route advertisement carries default prefix information, and a next hop indicated by the default prefix information is the second spine node device.

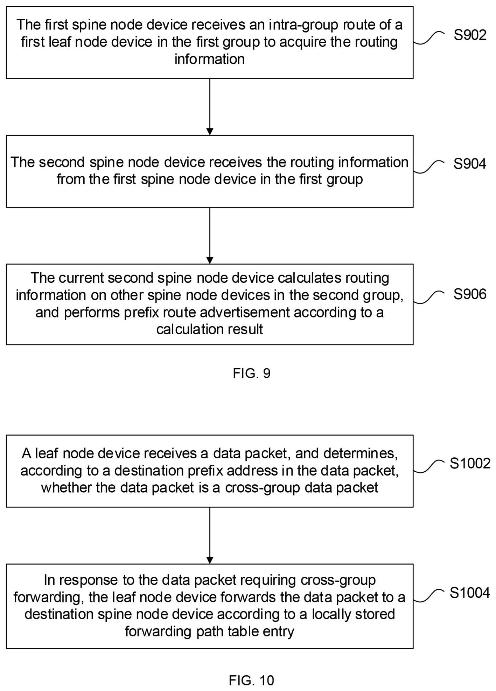

In an exemplary implementation, after the second spine node device receives the routing information from the first spine node device in the first group, the method further includes: calculating, by the current second spine node device, routing information on other spine node devices in the second group, and performing prefix route advertisement according to a calculation result. FIG. 9 is a sixth flowchart of the method for route advertisement according to the embodiments of the present disclosure. As shown in FIG. 9, the process includes the following steps.

Step S902: the first spine node device receives an intra-group route of a first leaf node device in the first group to acquire the routing information.

Step S904: the second spine node device receives the routing information from the first spine node device in the first group.

Step S906: the current second spine node device calculates routing information on other spine node devices in the second group, and performs prefix route advertisement according to a calculation result.

In the embodiments of the present disclosure, a top-level spine node device calculates routes of other top-level spine node devices in the group by taking itself into consideration in the role of the present group. If the calculation result shows that for routes of some prefixes, the present spine node device has no shortest path while other spine node devices have shortest paths, then in addition to the default route, the present spine node device also needs to advertise southbound that for these prefixes, the present spine node device is unreachable. In the Routing in Fat Trees (RIFT) protocol, this route is a negative de-aggregation route. Alternatively, the metric/cost of the routes to these prefixes is set to a maximum value to indicate that they are non-optimal routes.

In an exemplary implementation, performing the prefix route advertisement according to the calculation result includes at least one of: in response to the current second spine node device having a better forwarding path compared with the other spine node devices, performing, by the current second spine node device, prefix route advertisement to the second group, wherein a route metric/cost of the prefix route advertisement is smaller than a route metric/cost of the default route advertisement; and in response to the other spine node devices having a better forwarding path compared with the current second spine node device, performing, by the current second spine node device, prefix route advertisement to the second group, wherein the prefix route advertisement is used for advertising that a forwarding route whose next hop is the current second spine node device is a non-optimal route or an unreachable route.

In an exemplary implementation, performing, by the second spine node device, the prefix route advertisement according to the calculation result includes: performing, by the second spine node device, positive de-aggregation route advertisement or negative de-aggregation route advertisement through a RIFT protocol according to the calculation result, to implement the prefix route advertisement.

Through the above steps, a method for route advertisement is provided, in which a second spine node device receives routing information from a first spine node device in a first group; and the second spine node device performs route advertisement to a second leaf node device in a second group according to the routing information. The problems in the related art of high deployment cost and lack of an automatic forwarding mechanism in a dragonfly+ network are solved, and the effects of reducing the deployment cost of the dragonfly+ network and implementing an automatic forwarding mechanism are achieved.

The execution subjects of the above steps may be base stations, terminals, etc., but are not limited thereto.

The embodiments of the present disclosure further provide a method for packet forwarding. FIG. 10 is a first flowchart of the method for packet forwarding according to the embodiments of the present disclosure. As shown in FIG. 10, the process includes the following steps.

Step S1002: a leaf node device receives a data packet, and determines, according to a destination prefix address in the data packet, whether the data packet is a cross-group data packet.

Step S1004: in response to the data packet requiring cross-group forwarding, the leaf node device forwards the data packet to a destination spine node device according to a locally stored forwarding path table entry.

In an exemplary implementation, the data packet carries group identification information of a destination group.

In an exemplary implementation, in step S1004, forwarding, by the leaf node device, the data packet to the destination spine node device according to the locally stored forwarding path table entry includes: determining, by the leaf node device, an address of the destination spine node device according to the locally stored forwarding path table entry; and determining, by the leaf node device, a forwarding path according to a congestion state of the forwarding path and a route metric/cost, to forward the data packet to the destination spine node device.

In an exemplary implementation, determining, by the leaf node device, the forwarding path according to the congestion state of the forwarding path and the route metric/cost, to forward the data packet to the destination spine node device includes: in response to congestion states of a plurality of forwarding paths being non-congested and route metrics/costs being equal, forwarding the data packet to the destination spine node device in an Equal-Cost Multi-Path (ECMP) manner.

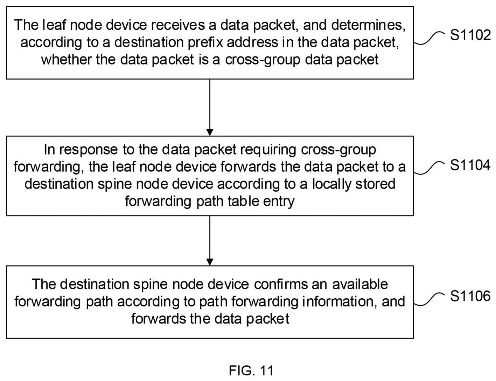

In an exemplary implementation, after the leaf node device forwards the data traffic packet to the destination spine node device according to the locally stored forwarding path table entry, the method further includes: confirming, by the destination spine node device, an available forwarding path according to path forwarding information, and forwarding the data packet. FIG. 11 is a second flowchart of the method for packet forwarding according to the embodiments of the present disclosure. As shown in FIG. 11, the process includes the following steps.

Step S1102: the leaf node device receives a data packet, and determines, according to a destination prefix address in the data packet, whether the data packet is a cross-group data packet.

Step S1104: in response to the data packet requiring cross-group forwarding, the leaf node device forwards the data packet to a destination spine node device according to a locally stored forwarding path table entry.

In an exemplary implementation, the data packet carries group identification information of a destination group.

Step S1106: the destination spine node device confirms an available forwarding path according to path forwarding information, and forwards the data packet.

In an exemplary implementation, before the leaf node device receives the data packet, the method further includes: acquiring, through pre-configuration or message interaction between leaf node devices of different groups, a correspondence between the data packet and group identification information of a destination group.

In the embodiments of the present disclosure, before the leaf node device receives the packet, the method further includes one of the following: 1) leaf node devices of different groups independently perform message interaction with each other to advertise a relationship between a destination prefix and a group ID. For example, a leaf node device, as a Provider Edge (PE) device, exchanges Border Gateway Protocol Virtual Private Network (BGP VPN) routes with a leaf node device in the destination group, and the leaf node device at the opposite end carries the ID information of the group to which it belongs when advertising the VPN routes, for example, the information may be carried in a BGP extended community. Thus, the leaf node device can acquire the group ID information to which the destination prefix belongs. 2) leaf node devices in different groups do not interact with each other, but instead, through a pre-planning/configuration manner, the correspondence between packets and Group IDs is specified on each leaf node device. 3) The packet received by the leaf node device directly carries the destination group ID information. The information may be directly delivered by a controller/application, etc., to a traffic sending node (such as a server or a network interface card) and encapsulated in the packet when the packet is sent.

In an exemplary implementation, the group identification information is delivered by a control device to the leaf node device and encapsulated in the data packet.

In an exemplary implementation, the group identification information is encapsulated in an IPv6 extension header or in a reserved field of the data packet.

Through the description of the above implementations, those skilled in the art can clearly understand that the method according to the above embodiments can be implemented by means of software plus a necessary general hardware platform, and of course, can also be implemented by hardware, but in many cases, the former is a better implementation. Based on such an understanding, the technical solution of the present disclosure, in essence or the part contributing to the prior art, may be embodied in the form of a software product, and the computer software product is stored in a storage medium (such as ROM/RAM, magnetic disk, optical disk), and includes several instructions for enabling a terminal device (which may be a mobile phone, a computer, a server, or a network device, etc.) to execute the methods described in the various embodiments of the present disclosure.

The present embodiment further provides an apparatus for route advertisement and an apparatus for packet forwarding, which are used to implement the above embodiments and preferred implementations, and details already described will not be repeated. As used below, the term "module" may implement a combination of software and/or hardware for a predetermined function. Although the apparatus described in the following embodiments is preferably implemented by software, implementations by hardware, or by a combination of software and hardware, are also possible and contemplated.

In the embodiments of the present disclosure, the apparatus for route advertisement is used in a DF+ network, and may be provided in or applied to a second spine node, and includes: a receiving module configured to receive routing information from a first spine node device in a first group; and an advertisement module configured to perform route advertisement to a second leaf node device in the second group according to the routing information. In actual implementation, the present disclosure does not impose specific limitations on the functional division and naming of modules in the apparatus for route advertisement, and they may be determined according to actual conditions, as long as the method for route advertisement in the above embodiments can be implemented.

In the embodiments of the present disclosure, the apparatus for packet forwarding is used in a DF+ network, and may be provided in or applied to a leaf node device, and includes: a receiving and determining module configured to receive a data packet and determine, according to a destination prefix address in the data packet, whether the data packet is a cross-group data packet; and a forwarding module configured to, in response to the data packet requiring cross-group forwarding, forward, by the leaf node device, the data packet to a destination spine node device according to a locally stored forwarding path table entry. In actual implementation, the present disclosure does not impose specific limitations on the functional division and naming of modules in the apparatus for packet forwarding, and they may be determined according to actual conditions, as long as the method for packet forwarding in the above embodiments can be implemented.

It should be noted that the above modules may be implemented by software or hardware. For the latter, they may be implemented in the following manner, but are not limited thereto: the above modules are all located in the same processor; or the above modules are respectively located in different processors in any combination.

The embodiments of the present disclosure may further provide a spine node device, used in a DF+ network, for executing the method for route advertisement in the above embodiments. The spine node device provided by the embodiments of the present disclosure may include different modules or units, for example, including: a receiving unit configured to receive routing information from a spine node device in another group; and an advertisement unit configured to perform route advertisement to a leaf node device in the present group according to the routing information. In actual implementation, the present disclosure does not impose specific limitations on the functional division and naming of units in the spine node device, and they may be determined according to actual conditions, as long as the method for route advertisement in the above embodiments can be implemented.

The embodiments of the present disclosure may further provide a leaf node device, used in a DF+ network, for executing the method for packet forwarding in the above embodiments. The leaf node device provided by the embodiments of the present disclosure may include different modules or units, for example, including: a receiving and determining unit configured to receive a data packet and determine, according to a destination prefix address in the data packet, whether the data packet is a cross-group data packet; and a forwarding unit configured to, in response to the data packet requiring cross-group forwarding, forward the data packet to a destination spine node device according to a locally stored forwarding path table entry. In actual implementation, the present disclosure does not impose specific limitations on the functional division and naming of units in the leaf node device, and they may be determined according to actual conditions, as long as the method for packet forwarding in the above embodiments can be implemented.

The embodiments of the present disclosure further provide a computer-readable storage medium, the computer-readable storage medium having a computer program stored therein, wherein the computer program is configured to, when running, execute steps in the method according to any one of the above method embodiments.

In an exemplary implementation, the above computer-readable storage medium may include but is not limited to: a USB flash drive, a Read-Only Memory (ROM), a Random Access Memory (RAM), a removable hard disk, a magnetic disk, or an optical disk, and other various media that can store computer programs.

The embodiments of the present disclosure further provide an electronic device, including a memory and a processor, the memory having a computer program stored therein, the processor being configured to run the computer program to execute the steps in the method according to any one of the above method embodiments.

In an exemplary implementation, the above electronic device may further include a transmission device and an input/output device, wherein the transmission device is connected to the above processor, and the input/output device is connected to the above processor.

For specific examples in the present embodiment, reference may be made to the examples described in the above embodiments and exemplary implementations, and the present embodiment will not repeat them here.

Obviously, those skilled in the art should understand that the above-mentioned modules or steps of the present disclosure may be implemented by a general-purpose computing device, and they may be concentrated on a single computing device or distributed on a network composed of multiple computing devices. They may be implemented by program codes executable by the computing device, so that they may be stored in a storage device and executed by the computing device. In some cases, the steps shown or described may be executed in an order different from that herein, or they may be respectively made into individual integrated circuit modules, or multiple modules or steps among them may be made into a single integrated circuit module for implementation. In this way, the present disclosure is not limited to any specific combination of hardware and software.

In order for those skilled in the art to better understand the technical solution of the present disclosure, the technical solution of the embodiments of the present disclosure will be described below with reference to scenario embodiments.

### Embodiment 1

In the embodiments of the present disclosure, the restrictions of first and second are no longer used for different groups, and likewise, the restrictions of first and second are no longer used for spine node devices and leaf node devices. This is because, for groups, the restrictions of first and second are only for distinguishing different groups. For spine node devices and leaf node devices, they are also only for distinguishing spine node devices or leaf node devices of different groups. Therefore, in the present Embodiment 1 and the subsequent embodiments, only restrictions of intra-group, the present group, and other groups are used, and the distinction of first and second is no longer made.

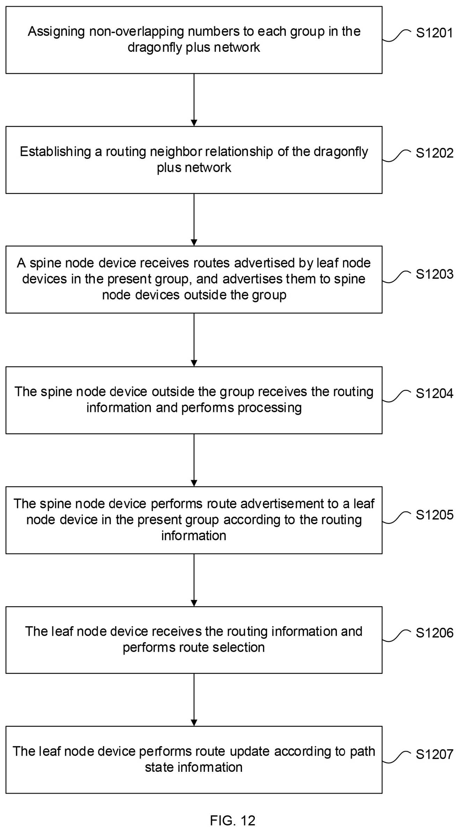

FIG. 12 is a flowchart of a method for packet forwarding according to Embodiment 1 of the present disclosure. As shown in FIG. 12, the method includes the following steps.

Step S1201: assigning non-overlapping numbers to each group in the dragonfly plus network.

Through configuration, each group in the dragonfly plus network is assigned a non-overlapping number. Role marking may also be performed on devices to determine whether they are spine devices or leaf devices.

In the embodiments of the present disclosure, the marking manners include the following.

In OSPF, different area IDs are configured for spine node devices and leaf node devices, for example, a leaf node device is configured with area 1, and a spine node device is configured with area 0.

In IS-IS, different level IDs are configured for spine node devices and leaf node devices, for example, a leaf node device is configured with level 0, and a spine node device is configured with level 1.

In RIFT, different level IDs are configured for spine node devices and leaf node devices, for example, a leaf node device is configured with level 0, and a spine node device is configured with level 1.

Step S1202: establishing a routing neighbor relationship of the dragonfly plus network.

In the embodiments of the present disclosure, establishing routing neighbors includes: establishing neighbors between each spine node device in a group and leaf node devices in the group; establishing neighbors between spine node devices between groups; and during the interaction of neighbor establishment messages between groups, each spine node device carries its respective group identifier (group ID).

In one embodiment, when a spine node device performs neighbor information interaction, it may also carry information indicating whether it supports the DF+ mode. Only when both spine node devices support the DF+ mode can neighbors be established.

Step S1203: a spine node device receives routes advertised by leaf node devices in the present group, and advertises them to spine node devices outside the group.

In the embodiments of the present disclosure, the above spine node device receiving routes advertised by leaf node devices in the present group corresponds to the first spine node device in the above embodiments receiving an intra-group route of a first leaf node device in the first group. The spine node device outside the group is the second spine node device of the second group.

In the embodiments of the present disclosure, when a leaf node device performs intra-group route advertisement, it may modify the next hop to the address of the present device. In one embodiment, it may simultaneously carry its own group ID information; it may also carry the access/affiliation device of the destination prefix, that is, the group ID information of the leaf node device that advertises the destination prefix.

Step S1204: the spine node device outside the group receives the routing information and performs processing.

In the embodiments of the present disclosure, the spine node device outside the group, i.e., the second spine node device, receives the routing information from the first spine node device and performs the following processing:
1) storing the routing information in its own table entry.
2) forwarding the routing information to spine node devices in other groups other than the group where the sending spine node device is located.

The spine node device outside the group, i.e., the second spine node device, during route advertisement, needs to modify the next hop to itself. In one embodiment, it may simultaneously carry its own group ID. It may also carry the device to which the destination prefix belongs, that is, the group ID information of the leaf node device that advertises the destination prefix.

In one embodiment, in order to reduce the amount of inter-group routing, it may be required to control the route when forwarding the route to other spine node devices, limiting the number of transit hops of the route to one hop.

In one embodiment, the manner of limiting the number of transit hops to one hop includes: carrying a field in the routing packet to record the number of hops of route reflection, and limiting the route reflection to 1 hop; when a spine node device receives a routing protocol packet sent by another spine node device, it first checks the field, and if the route has not been reflected and the spine node device has neighbors other than the sending spine node device, the route is reflected; if a packet with a reflection hop count of 1 is received, the route is only received and not reflected; if a packet with a hop count exceeding 1 hop is received, it is discarded. The field reflecting the number of route hops may be a mandatory field, or may be carried only after the route has been reflected.

In one embodiment, in a case where a field is carried in the routing packet to record the number of hops of route reflection and the route reflection is limited to 1 hop, it is determined that the route has not been reflected through the number of route hops in the field being 0.

In one embodiment, in a case where, when a spine node device receives a routing protocol packet sent by another spine node device, it first checks the field, and if the route has not been reflected and the spine node device has neighbors other than the sending spine node device, the route is reflected, it is determined whether the route has been reflected through whether the field is carried in the routing packet.

In the above steps, the spine node device outside the group, i.e., the second spine node device, during route advertisement, further needs to carry path quality information in the route advertisement information, expressed in forms such as metric/cost, and the meaning of the path quality information includes but is not limited to routing distance, bandwidth, delay, etc., and the information is accumulated as the routing message is transmitted.

Step S1205: the spine node device performs route advertisement to a leaf node device in the present group according to the routing information.

In the embodiments of the present disclosure, the spine node device selects routes according to the routes advertised by other spine node devices, and performs route advertisement to leaf node devices in the group, advertising the optimal route to the destination prefix, including: first, the spine node device calculates forwarding path information to the destination address according to the received routing information; then, according to the availability of the paths, such as whether delay and congestion state satisfy availability requirements, selects the table entry with the smallest metric/cost information among the routes corresponding to available paths, and then performs route advertisement to leaf node devices in the group.

In one embodiment, the routing information for performing route advertisement to leaf node devices in the group includes: destination prefix, route metric/cost information, and the next hop being the node address of the spine node device. It may also include the group ID information to which the destination prefix belongs.

Step S1206: the leaf node device receives the routing information and performs route selection.

In the embodiments of the present disclosure, in a case where multiple spine node devices advertise a route of the same prefix to one leaf node device, the leaf node device needs to store multiple pieces of routing information. The leaf node device selects, according to congestion states to the next-hop spine node devices, a table entry that goes to the spine node device with no congestion and the smallest route metric/cost. When there are multiple non-congested spine node devices with equal route metrics/costs, multiple table entries may be selected for forwarding in an Equal-Cost Multi-Path (ECMP) manner. The table entry selection may also be performed each time before the leaf node device sends a packet.

Step S1207: the leaf node device performs route update according to path state information.

In the embodiments of the present disclosure, after a path state changes, if any of the following conditions occurs, a route update process is triggered:
if all paths of the spine node device to the destination prefix do not satisfy availability conditions, the spine node device sends a route withdrawal message to the leaf node device;
if an available route is newly added on the spine node device and its route metric/cost is the smallest, the spine node device sends a route update message to the leaf node device to update its route metric/cost information;
if the route with the smallest route metric/cost on the spine node device changes from available to unavailable, the smallest route metric/cost among currently available routes is selected, and the spine node device sends a route update message to the leaf node device to update its route metric/cost information.

In the embodiments of the present disclosure, it should be noted that the path availability information mentioned above may be the congestion state, delay, bandwidth, queue depth, etc. of the entire path, or may only include the congestion state, delay, bandwidth, queue depth, etc. of the path to the next hop. Such information may be acquired by the device itself by sending detection packets, or may be acquired centrally by a management and control system and then notified to the device as the availability state of the path.

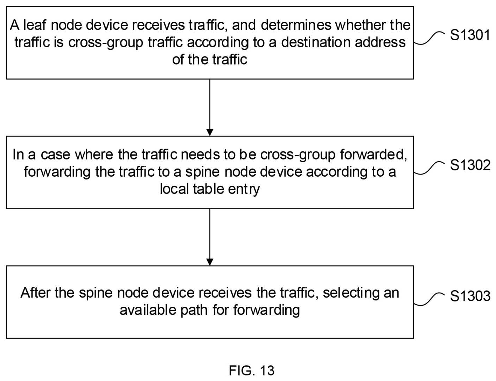

In Embodiment 1, according to the above method for packet forwarding, a method for packet forwarding is further provided. FIG. 13 is a flowchart of a method for packet forwarding according to Embodiment 1 of the present disclosure. As shown in FIG. 13, the method includes the following steps.

Step S1301: a leaf node device receives traffic, and determines whether the traffic is cross-group traffic according to a destination address of the traffic.

Step S1302: in a case where the traffic needs to be cross-group forwarded, forwarding the traffic to a spine node device according to a local table entry. The following table entry selection process may also be included:
1) determining, according to the local table entry, a spine node device that is the next hop to the destination address;
2) according to congestion states from the leaf node device to these spine node devices, selecting a table entry that goes to the spine node device with no congestion and the smallest metric/cost, and forwarding to the corresponding spine node device. When there are multiple non-congested spine node devices with equal metrics/costs, forwarding may be performed in an ECMP manner.

Step S1303: after the spine node device receives the traffic, selecting an available path for forwarding.

In the embodiments of the present disclosure, manners in which the spine node device selects an available path include:
1) shortest path first, i.e., selecting the path with the smallest path quality value, which may be one or more paths;
2) an unequal ECMP manner, in which some paths are selected from both the shortest paths and non-shortest paths, and traffic is load-balanced among these paths.

In Embodiment 1, the manner of selecting available paths may also be changed by configuring the spine node device. For example, the selection preference and the number of selected paths, etc.

### Embodiment 2

In Embodiment 1, when a spine node device advertises routes to leaf node devices in the group, it still carries the final destination prefix information. In the present Embodiment 2, the route advertised by a spine node device to leaf node devices in the group is a default prefix, and this route is independent of prefixes within the destination group, and may be advertised after neighbor establishment and topology learning between spine node devices are completed. The advantage of this manner is that a leaf node device only sees the default route to the destination group, and the number of routing table entries is only related to the number of groups in the network, and is unrelated to the prefix information on leaf node devices in other groups, greatly reducing the number of forwarding table entries on leaf node devices.

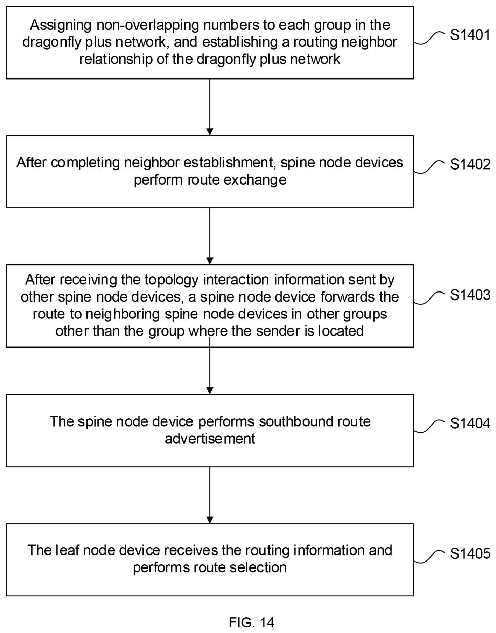

FIG. 14 is a flowchart of a method for packet forwarding according to Embodiment 2 of the present disclosure. As shown in FIG. 14, the method includes the following steps.

Step S1401: assigning non-overlapping numbers to each group in the dragonfly plus network, and establishing a routing neighbor relationship of the dragonfly plus network.

Step S1402: after completing neighbor establishment, spine node devices perform route exchange.

In the embodiments of the present disclosure, during the route exchange process, path quality information needs to be carried. In one embodiment, the group ID information to which a spine node device belongs may also be carried. Since the group ID corresponding to a spine node device has already been carried during neighbor establishment, even if a group ID is not carried during route exchange, the group from which the route comes may be determined based on the correspondence between spine node devices and groups acquired during neighbor establishment. Therefore, under certain routing algorithms, the group ID in route exchange is optional.

Step S1403: after receiving the topology interaction information sent by other spine node devices, a spine node device forwards the route to neighboring spine node devices in other groups other than the group where the sender is located.

In the embodiments of the present disclosure, in order to reduce the amount of inter-group routing, it may be required to control the route when forwarding the route to other spine node devices, limiting the number of transit hops of the route to one hop.

The manner of limiting the number of transit hops to one hop includes: carrying a field in the routing packet to record the number of hops of route reflection, and limiting the route reflection to 1 hop, wherein it is determined that the route has not been reflected through the number of route hops in the field being 0. When a spine node device receives a routing protocol packet sent by another spine node device, it first checks the field, and if the route has not been reflected and the spine node device has neighbors other than the sending spine node device, the route is reflected, wherein it is determined whether the route has been reflected through whether the field is carried in the routing packet. If a packet with a reflection hop count of 1 is received, the route is only received and not reflected. If a packet with a hop count exceeding 1 hop is received, it is discarded. The field reflecting the number of route hops may be a mandatory field, or may be carried only after the route has been reflected.

In the route advertisement process of the above steps, path quality information further needs to be carried in the route advertisement information, expressed in forms such as metric/cost, and the meaning of the path quality information includes but is not limited to routing distance, bandwidth, delay, etc., and the information is accumulated as the routing message is transmitted.

Step S1404: the spine node device performs southbound route advertisement.

In the embodiments of the present disclosure, according to the learned topology information, for a specific destination group, the spine node device selects the smallest path quality information from available table entries according to path availability for southbound route advertisement. The routing information advertised by the spine node device includes the destination group ID, the default prefix, path quality information, and the node address of the spine node device as the next hop.

Step S1405: the leaf node device receives the routing information and performs route selection.

In the embodiments of the present disclosure, in a case where there are multiple next-hop spine node devices for the same destination group, multiple pieces of routing information need to be stored. The leaf node device selects, according to congestion states to the next-hop spine node devices, a next-hop spine node device that goes to the destination group with no congestion and the smallest metric/cost. When there are multiple non-congested spine node devices with equal metrics/costs, multiple table entries may be selected for forwarding in an ECMP manner. The table entry selection may also be performed each time before the leaf node device sends a packet.

In Embodiment 2, the method further includes the following steps.

A spine node device receives routes advertised by leaf node devices in the present group, and advertises them to spine node devices outside the group, modifying the next hop to the address of the present device, and possibly simultaneously carrying its own group ID information; it may also carry the group ID information of the leaf node device that advertises the destination prefix.

The second spine node device receives the routing information and performs processing. The difference from Embodiment 1 is that after the spine node device learns the detailed routes on the leaf node devices, it only stores them locally and does not advertise them to leaf node devices in the present group.

The spine node device calculates forwarding path information to the destination address according to the received routing information and topology information; then, according to path availability, such as whether delay and congestion state satisfy availability requirements, selects forwarding paths from available paths to form forwarding table entries. The spine node device may also perform table entry selection according to path availability after receiving traffic from the leaf node device. Regardless of which step the table entry selection is performed in, the manner in which the spine node device selects available paths for forwarding is similar. Manners of selecting available paths include:
1) shortest path first, i.e., selecting the path with the smallest path quality value, which may be one or more paths;
2) an unequal ECMP manner, in which some paths are selected from both the shortest paths and non-shortest paths, and traffic is load-balanced among these paths.

In one embodiment, the path selection manner may be changed by configuring the spine node device. For example, the selection preference and the number of selected paths, etc.

In the embodiments of the present disclosure, the sequence of route selection performed by the spine node device after receiving routing information and route selection performed by the leaf node device after receiving routing information is not strictly limited.

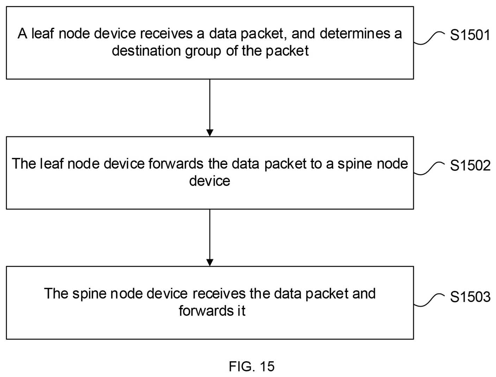

In Embodiment 2, a method for packet forwarding is further provided. FIG. 15 is a flowchart of a method for packet forwarding according to Embodiment 2 of the present disclosure. As shown in FIG. 15, the method includes the following steps.

Step S1501: a leaf node device receives a data packet, and determines a destination group of the packet.

In the embodiments of the present disclosure, before the leaf node device receives the packet, the method further includes one of the following.
1) leaf node devices of different groups independently perform message interaction with each other to advertise a relationship between a destination prefix and a group ID. For example, a leaf node device, as a Provider Edge (PE) device, exchanges BGP VPN routes with a leaf node device in the destination group, and the leaf node device at the opposite end carries the ID information of the group to which it belongs when advertising the VPN routes, for example, the information may be carried in a BGP extended community. Thus, the leaf node device can acquire the group ID information to which the destination prefix belongs.
2) leaf node devices in different groups do not interact with each other, but instead, through a pre-planning/configuration manner, the correspondence between packets and Group IDs is specified on each leaf node device.
3) The packet received by the leaf node device directly carries the destination group ID information. The information may be directly delivered by a controller/application, etc., to a traffic sending node (such as a server or a network interface card) and encapsulated in the packet when the packet is sent.

Manners in which the packet carries the destination group ID information include: carrying in a reserved field in a source/destination address, carrying in an IPv6 extension header, etc.

Step S1502: the leaf node device forwards the data packet to a spine node device.

In the embodiments of the present disclosure, forwarding is performed to a next-hop spine node device according to the destination group ID and a local table entry.

In one embodiment, forwarding, by the leaf node device, the packet to the spine node device may further include the following table entry selection process: according to congestion states from the leaf node device to these spine node devices, selecting a table entry that goes to the spine node device with no congestion and the smallest metric/cost, and forwarding to the corresponding spine node device. When there are multiple non-congested spine node devices with equal metrics/costs, forwarding may be performed in an ECMP manner.

In the embodiments of the present disclosure, the manner in which the leaf node device forwards the data packet may further include: when the leaf node device does not have the group ID information to which the destination prefix belongs, selecting a non-congested spine node device as a next hop for forwarding according to a specific algorithm, such as a random algorithm.

Step S1503: the spine node device receives the data packet and forwards it.

In the embodiments of the present disclosure, after the spine node device receives the traffic, if the table entry has been pre-selected, forwarding is performed directly according to the table entry. Alternatively, table entry selection is performed after the destination is determined upon receiving the traffic.

### Embodiment 3

In Embodiment 2, the burden of routing entries on leaf node devices is further reduced by means of default routes carrying group IDs, but at the same time, it is required that a leaf node device can confirm the group information of the destination before forwarding the packet.

In the embodiments of the present disclosure, with regard to route advertisement from spine node devices to leaf node devices, a default route manner without carrying group IDs is adopted. However, if multiple spine node devices in the same group all advertise default routes into the group, the leaf node device may select a spine node device on a non-shortest path through random selection. In Embodiment 3, this situation is introduced. In Embodiment 3, the spine node device does not carry a group ID during southbound advertisement, but still needs to advertise routes for all prefixes.

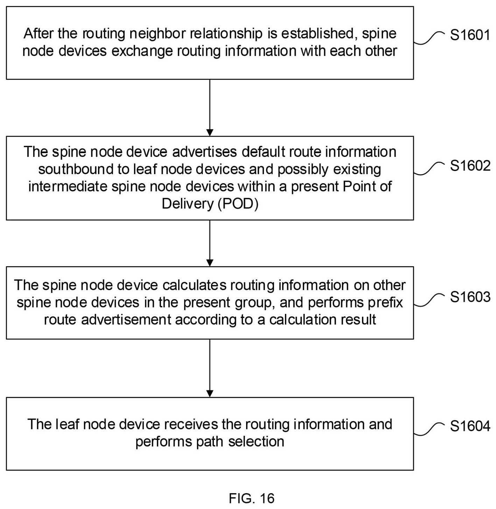

FIG. 16 is a flowchart of a method for route advertisement according to Embodiment 3 of the present disclosure. As shown in FIG. 16, the method includes the following steps.

Step S1601: after the routing neighbor relationship is established, spine node devices exchange routing information with each other.

In the embodiments of the present disclosure, the exchange of routing information between spine node devices includes: first, top-level spine node devices of each group acquire global topology information, and then exchange routing information with other spine node devices.

Step S1602: the spine node device advertises default route information southbound to leaf node devices and possibly existing intermediate spine node devices within a present Point of Delivery (POD).

In the embodiments of the present disclosure, in a case where the roles of spine node devices are non-uniform, for example, when going to a certain destination, some spine node devices have shortest paths while some spine node devices only have non-shortest paths, if only default routes are advertised southbound, a leaf node device may select a spine node device going to a non-shortest path when selecting a path, making the path non-optimal. Therefore, in such a case, it is necessary to distinguish optimal spine node devices from non-optimal spine node devices during southbound advertisement.

Step S1603: the spine node device calculates routing information on other spine node devices in the present group, and performs prefix route advertisement according to a calculation result.

In the embodiments of the present disclosure, a top-level spine node device calculates routes of other top-level spine node devices in the group by taking itself into consideration in the role of the present group. If the calculation result shows that for routes of some prefixes, the present spine node device has no shortest path while other spine node devices have shortest paths, then in addition to the default route, the present spine node device also needs to advertise southbound that for these prefixes, the present spine node device is unreachable. Alternatively, in the RIFT protocol, this route is a negative de-aggregation route, or the metric/cost of the routes to these prefixes is set to a maximum value.

In the embodiments of the present disclosure, another possible manner is that a top-level spine node device calculates routes of other top-level spine node devices in the group by taking itself into consideration in the role of the present group. If the calculation result shows that for routes of some prefixes, the present spine node device has a shortest path while other spine node devices do not have shortest paths, then in addition to the default route, the present spine node device also needs to advertise southbound that for these prefixes, the present spine node device is more optimal. The metric/cost value carried in the southbound advertisement of these routes is smaller than that of the default route. In the RIFT protocol, this route is a positive de-aggregation route.

Step S1604: the leaf node device receives the routing information and performs path selection.

In the embodiments of the present disclosure, the leaf node device receives routes, and in a case where there are multiple next-hop spine node devices for the same destination prefix, multiple pieces of routing information need to be stored. Then route selection is performed: the leaf node device selects, according to congestion states to the next-hop spine node devices, a next-hop spine node device that goes to the destination group with no congestion and the smallest metric/cost. When there are multiple non-congested spine node devices with equal metrics/costs, multiple table entries may be selected for forwarding in an ECMP manner. Another possible manner is that table entry selection is performed each time before the leaf node device sends a packet.

In the route advertisement steps of Embodiment 3, the steps of route selection performed by the spine node device after receiving routing information and route selection performed by the leaf node device after receiving routing information are also included, and the sequence thereof is not strictly limited.

### Embodiment 4

In Embodiment 4, with respect to the route advertisement method proposed in Embodiment 1, the forwarding table entry structure of Embodiment 1 is adopted, and the RIFT protocol is taken as an example to illustrate the extension of the routing protocol.

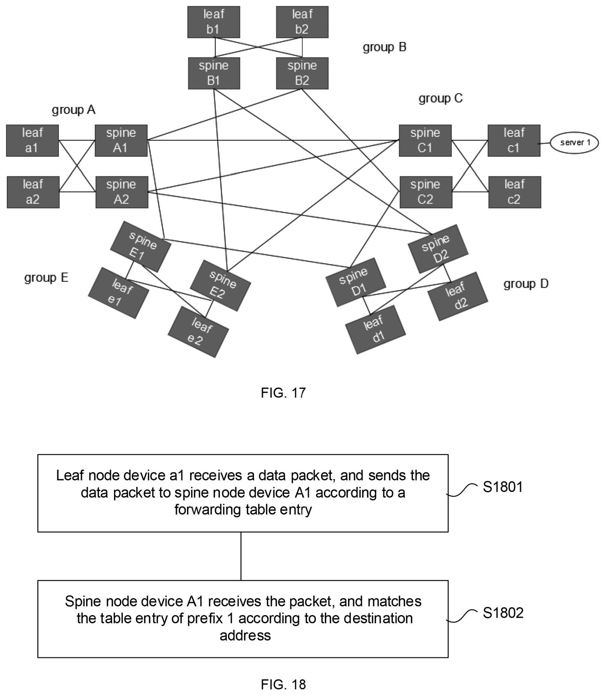

FIG. 17 is a schematic diagram of a service networking of a dragonfly plus network according to Embodiment 4 of the present disclosure. As shown in FIG. 17, the networking within a group is a spine node device-leaf node device architecture, and loose connections are made between groups to form full interconnection between groups. Groups A-E are numbered, with group IDs of 100/200/300/400/500 respectively. Server 1 is connected to leaf node device c1, with a prefix of prefix 1. The route cost value is used to express the rule of route propagation, with the rule being that each hop of propagation within a group increases by 1, and each hop of propagation between groups increases by 100.

In the present embodiment, the route advertisement flow is as follows.

Leaf node device c1 advertises routes to spine node devices C1 and C2:
prefix: prefix 1; next-hop: loopback c1; next-hop group id: 300, cost = 1.

For route advertisement between spine node devices, spine node devices in group C respectively advertise routes from leaf node device 1. Taking spine node device C1 as an example, C1 establishes routing neighbors with spine node devices A2/E2 respectively according to the connection state of the network, and advertises routes thereto, with the advertisement content being: prefix: prefix 1; next-hop: loopback C1; next-hop group id: 300, cost plus 100, i.e., 101. C2 advertises routes to B2 and D1, with the advertisement content being: prefix: prefix 1; next-hop: loopback C2; next-hop group id: 300; cost 101.

The flow after spine node device A2 receives the route from C1 is as follows.
1) storing the route in its own routing table.
2) continuing to propagate the route. A2 sends the route to neighbor D2 other than C1, with the content including: prefix: prefix 1; next-hop: loopback A2; next-hop group-ID; cost 201.

After receiving the route, spine node device D2, finding that reflection is no longer needed, only stores the route in the routing table. Other routes also follow a similar process.

**Table 1. Example of path information table entries of spine node device A1 to the destination prefix**

| Dst-IP | Dst Group-ID | Next-hop | Next-hop Group-ID | Cost |
|---|---|---|---|---|
| Prefix1 | 300 | C1 | 300 | 101 |
| Prefix1 | 300 | B2 | 200 | 201 |

As shown in Table 1, in group A, after route learning is completed, spine node device A1 obtains two paths to Prefix 1 through topology learning and calculation.

**Table 2. Example of path information table entries of spine node device A2 to the destination prefix**

| Dst-IP | Dst Group-ID | Next-hop | Next-hop Group-ID | Cost |
|---|---|---|---|---|
| Prefix1 | 300 | C1 | 300 | 101 |

As shown in Table 2, in group A, after route learning is completed, spine node device A2 obtains one path to Prefix 1 through topology learning and calculation.

In the embodiments of the present disclosure, the above Tables 1 and 2 are exemplary illustrations, only illustrating information present on the devices, and do not represent actual table entry formats.

In the embodiments of the present disclosure, when spine node devices perform southbound route advertisement, A1 first finds, according to path congestion states, that the two forwarding paths are both non-congested, selects the table entry with the smallest cost, and advertises routes to a1 and a2 respectively. The route content is: prefix:prefix1,dst group-id:300;next hop:A1;cost 102. The cost value is the smallest cost 101 on A1, with 1 added for one more hop within the group. After leaf node device a1 receives the routes, it stores all table entries. When generating forwarding table entries, it checks the congestion state from a1 to the next hops, and finds that the path from a1 to A2 is congested, so it selects the table entry with the next hop being A1.

The route advertised southbound by spine node device A2 is: prefix:prefix1,dst group-id:300;next hop:A2;cost 102.

According to the dragonfly+ networking architecture in Embodiment 4, the embodiments of the present disclosure further provide a method for packet forwarding. FIG. 18 is a flowchart of a method for packet forwarding according to Embodiment 4 of the present disclosure. As shown in FIG. 18, the method includes the following steps.

Step S1801: leaf node device a1 receives a data packet, and sends the data packet to spine node device A1 according to a forwarding table entry.

Step S1802: spine node device A1 receives the packet, and matches the table entry of prefix 1 according to the destination address.

In one embodiment, the paths corresponding to the two table entries are both non-congested, and load-sharing forwarding is performed on the two paths according to an adaptive routing policy.

In the embodiments of the present disclosure, in order to apply the RIFT protocol to a dragonfly plus topology, the extension of the RIFT protocol includes the following content.
1) A top-level spine node device in a dragonfly plus network serves as a Time of Flight (TOF) in the RIFT protocol; a leaf node device in a dragonfly plus network serves as a leaf node device role in the RIFT protocol. A group in a dragonfly plus network serves as a Point of Delivery (POD) in the RIFT protocol.
2) The topology information and reachability information of the RIFT protocol are transmitted through Topology Information Elements (TIEs), and a new Key Value (KV) type needs to be extended to carry group ID information in a KV TIE.
3) In the related art, S-TIEs only support carrying default routes and de-aggregation routes sent to lower layers. In a dragonfly plus network, S-TIEs need to be extended so that, within a group, spine node devices can transmit detailed routing information to leaf node devices through Southbound Topology Information Elements (S-TIEs).

### Embodiment 5

In Embodiment 4, the manner adopted is that spine node devices advertise their preferred routes to leaf node devices by prefix. In the present Embodiment 5, a spine node device only advertises a default route to the destination group to a leaf node device.

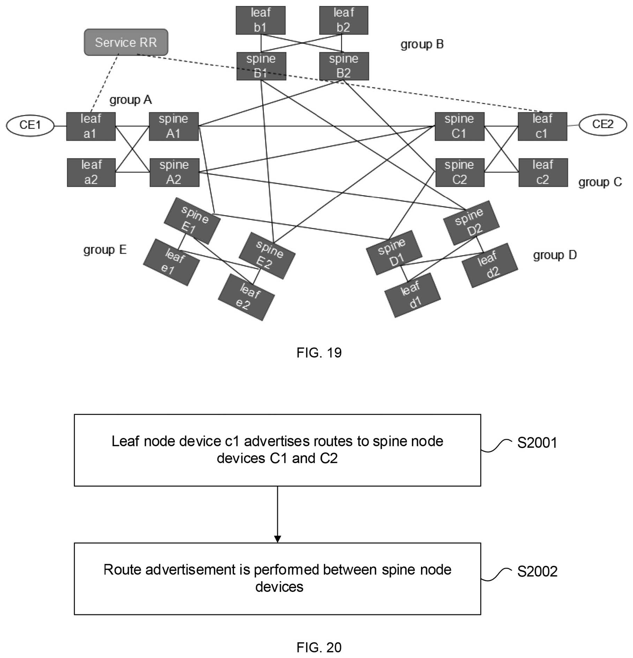

FIG. 19 is a schematic diagram of a service networking of a dragonfly plus network according to Embodiment 5 of the present disclosure. As shown in FIG. 19, taking group A and group C as source and destination groups respectively as an example, a leaf node device, as a Provider Edge (PE) node in VPN services, performs BGP VPN route exchange through a service Route Reflector (service RR), and carries, in BGP VPN route messages, group ID information of the group to which the device sending the VPN route message belongs, which may be carried through BGP extended community attribute information.

Leaf node device c1 sends a BGP VPN route. After receiving it, the service RR reflects it to leaf node device a1. Table 3 shows the VPN table entry of leaf node device a1.

**Table 3. VPN table entry of leaf node device a1**

| Dst IP | Dst Group ID | VPN Label |
|---|---|---|
| Prefix CE2 | 300 | 3000 |

In the embodiments of the present disclosure, a single routing protocol runs inside the dragonfly+ network. Taking the RIFT protocol as an example, in Embodiment 5, first, the internal configuration and neighbor establishment process of the dragonfly+ network are described.

The topology learning mechanism within a group remains unchanged. After completing neighbor establishment, spine node devices perform topology learning. During the topology exchange process, the group ID information to which a spine node device belongs and path cost information need to be carried. For the RIFT protocol, TIE information needs to be sent in the east-west direction, in which the group ID information is carried, and may be carried in a KV TIE. After receiving east-west TIE information advertised by a neighbor node, a spine node device sends the TIE information to other spine node devices except the sending spine node device, and further needs to carry cost information therein, with the cost information increasing with the number of transit hops.

The TIE message from C2 to B2 contains the following content: neighbor C2,source C2, source group-ID 300,cost 100. After receiving it, B2 forwards it to A1, with the cost increased, and the message content is as follows: neighbor B2,source C2,source group-ID 300,cost 100. After receiving it, A1 does not continue to send because the route has been forwarded once.

In addition, A1 also receives a TIE message sent by C1: neighbor C1,source C1, source group-ID 300,cost 100.

In the above TIE messages, a neighbor group ID may also be carried.

In the embodiments of the present disclosure, A1 finds, through calculation, that there are two paths to group 300, which are:
A1--C1, cost 100;
A1--B2--C2, cost 200.

First, A1 determines path availability according to path congestion states, finds that both paths are available, and selects the smallest cost value of 100. Then, it advertises a default route within the group indexed by the destination group ID. Since one hop is passed within the group, the cost is increased by 1, and the route content includes: prefix:0/0;dst group-ID:300;next-hop:A1;cost 101. Likewise, A2 also advertises a route southbound: prefix:0/0;dst group-ID:300;next-hop:A2;cost 101.

After leaf node device a1 receives the routes, it checks the available states between a1-A1 and a1-A2, and finds that a1-A2 is congested. Therefore, for packets destined for group 300, it selects the default route table entry with the next hop being A1.

In one embodiment, within group 300, leaf node devices also advertise their own routing information northbound to spine node devices, according to existing routing mechanisms.

After receiving the route, spine node device C1 advertises east-west routes to spine node devices outside the group, with the destination being the leaf node device address, the next hop being the spine node device itself, and carrying the group ID information of the spine node device itself, and may also carry the group ID information of the source leaf node device. For example, prefix:prefixc1;next-hop:C1 address; next-hop group 300;source group 300;cost 1.

In Embodiment 5, routes are advertised to neighboring spine node devices, and the neighboring spine node devices perform route forwarding, with a maximum of one forwarding. Detailed routes to leaf node devices are only stored on spine node devices and are not further transmitted to southbound leaf node devices.

In the embodiments of the present disclosure, leaf node device a1 receives a packet sent by CE1, with the destination address being the CE2 address. By looking up the local VPN table entry, it finds that the group ID to which the destination packet belongs is 300. Then it looks up the default route table entry and sends the packet to the next hop A1. Spine node device A1 forwards the packet after receiving it.

In the embodiments of the present disclosure, the extension of the RIFT protocol includes the following content.
1) A top-level spine node device in a Dragonfly+ network serves as a TOF role in the RIFT protocol; possibly existing intermediate spine node devices serve as spine node device roles in the RIFT protocol; a leaf node device in a Dragonfly+ network serves as a leaf node device role in the RIFT protocol. A group in a dragonfly+ network serves as a POD in the RIFT protocol.
2) The topology information and reachability information of the RIFT protocol are transmitted through TIEs, and a new KV type needs to be extended to carry group ID information in a Key Value (KV) TIE.
3) In the related art, S-TIEs support carrying default routes sent to lower layers, and need to carry group ID information in the routes to form default routes indexed by group IDs.

### Embodiment 6

In Embodiment 6, taking the dragonfly+ networking architecture shown in FIG. 17 and the example of group E going to group C, only spine node device E2 has a direct connection with spine node device C1 and has a shortest path, while spine node device E1 needs to go through spine node device D1 or spine node device A1. In the present embodiment, the neighbor establishment process will not be described again.

In the embodiments of the present disclosure, the networking within a group is a spine node device-leaf node device architecture, and loose connections are made between groups to form full interconnection between groups. Groups A-E are numbered, with group IDs of 100/200/300/400/500 respectively. Server 1 is connected to leaf node device c1, with a prefix of prefix 1. The route cost value is used to express the rule of route propagation, with the rule being that each hop of propagation within a group increases by 1, and each hop of propagation between groups increases by 100.

FIG. 20 is a flowchart of a method for route advertisement according to Embodiment 6 of the present disclosure. As shown in FIG. 20, the method includes the following steps.

Step S2001: leaf node device c1 advertises routes to spine node devices C1 and C2.

The advertised route content is: prefix: prefix1;next-hop: loopback c1;cost=1.

Step S2002: route advertisement is performed between spine node devices.

In the embodiments of the present disclosure, for route advertisement between spine node devices, spine node devices in group C respectively advertise routes from leaf node device 1. Taking spine node device C1 as an example, C1 establishes routing neighbors with spine node devices A2/E2 respectively according to the connection state of the network, and advertises routes thereto, with the advertisement content being: prefix: prefix1;next-hop: loopback C1;cost plus 100, i.e., 101.

In the embodiments of the present disclosure, after route learning between spine node devices is completed, the routing table on spine node device E2 to prefix 1 is: prefix: prefix1;next-hop: loopback C1;cost101. Since spine node device E1 is not directly connected to spine node device C1 or spine node device C2, the shortest path still requires one intermediate hop. After calculation, the routing table on E2 to prefix 1 is: prefix: prefix1;next-hop: loopback C1;cost201. E1 and E2 only send default routes southbound. E1 sends: prefix:0/0;next-hop:E1;cost 101. E2 sends: prefix:0/0;next-hop:E2;cost 101.

In the embodiments of the present disclosure, since E2 can learn the global topology and routing information, E2 can calculate path information on E1. Through calculation, it finds that for prefix 1, E2 has a shortest path while E1 does not, thus triggering a positive de-aggregation process. In addition to the default route, E2 sends a detailed route with a cost less than or equal to the default route, the content being: prefix:prefix1;next-hop:E2;cost 101, indicating that under the same conditions, E2 is more optimal for going to prefix 1.

In summary, the embodiments of the present disclosure provide a method for route advertisement and a method for packet forwarding, which configure two levels of routing, so that leaf node devices do not participate in global routing and only learn routes to spine node devices in the present group, and forwarding paths across groups are determined by spine node devices. In one embodiment, group ID information is carried during route advertisement, and forwarding is performed using the destination group as an index. In one embodiment, the RIFT protocol is extended to support routing in a dragonfly+ network. The problems in the related art that dragonfly plus networks lack an automatic forwarding mechanism based on distributed routing, and that when the network scale is large, leaf nodes need to maintain a large number of detailed routing tables, which imposes a heavy burden on the devices and is not conducive to reducing deployment costs, are solved.

The above descriptions are only preferred embodiments of the present disclosure, and are not intended to limit the present disclosure. For those skilled in the art, the present disclosure may have various changes and modifications. Any modifications, equivalent substitutions, improvements, etc., made within the principles of the present disclosure shall be included in the protection scope of the present disclosure.

## Claims

1. A method for route advertisement, used in a dragonfly plus network, comprising:
receiving, by a second spine node device, routing information from a first spine node device in a first group; and
performing, by the second spine node device, route advertisement to a second leaf node device in a second group according to the routing information.

2. The method according to claim 1, wherein, before receiving, by the second spine node device, the routing information from the first spine node device in the first group, the method further comprises:
receiving, by the first spine node device, an intra-group route of a first leaf node device in the first group, to acquire the routing information.

3. The method according to claim 1, wherein, before receiving, by the second spine node device, the routing information from the first spine node device in the first group, the method further comprises:
assigning non-overlapping numbers to each group in the dragonfly plus network, and performing role marking on network devices in each group to distinguish spine node devices from leaf node devices; and
establishing a routing neighbor relationship of the dragonfly plus network to acquire routing information of the dragonfly plus network.

4. The method according to claim 3, wherein the manner of performing role marking on the network devices in each group comprises at least one of:
configuring, in an Open Shortest Path First (OSPF) protocol, different area numbers for the spine node devices and the leaf node devices;
configuring, in an Intermediate System to Intermediate System (IS-IS) routing protocol, different level numbers for the spine node devices and the leaf node devices; and
configuring, in a Routing in Fat Trees (RIFT) protocol, different level numbers for the spine node devices and the leaf node devices.

5. The method according to claim 3, wherein the routing neighbor relationship at least comprises:
an intra-group routing neighbor relationship between a spine node device and a leaf node device in a same group; and
a routing neighbor relationship between spine node devices in different groups.

6. The method according to claim 5, wherein interactive information for establishing the routing neighbor relationship of the dragonfly plus network at least comprises at least one of:
group identification information of each of the spine node devices of different groups; and
route mode support capability information of the dragonfly plus network of each of the spine node devices of different groups.

7. The method according to claim 1, wherein, after receiving, by the second spine node device, the routing information from the first spine node device in the first group, the method further comprises:
performing, by the second spine node device, cross-group route advertisement according to the routing information.

8. The method according to claim 7, wherein performing, by the second spine node device, the cross-group route advertisement according to the routing information comprises:
sending, by the second spine node device, a cross-group route advertisement to other neighboring spine node devices except the first spine node device, wherein the cross-group route advertisement carries a next-hop address, and the next-hop address is an address of the second spine node device.

9. The method according to claim 8, wherein the cross-group route advertisement further carries group identification information to which a leaf node device of a destination prefix belongs.

10. The method according to claim 8, wherein the cross-group route advertisement further carries group identification information of the second spine node device.

11. The method according to claim 7, wherein a number of transit hops of the cross-group route advertisement is one hop.

12. The method according to claim 11, wherein the cross-group route advertisement carries a preset field, wherein the preset field is used for limiting the number of transit hops of the transit route to one hop.

13. The method according to claim 1, wherein performing, by the second spine node device, the route advertisement to the second leaf node device in the second group according to the routing information comprises:
acquiring, by the second spine node device, forwarding path information of a destination address according to the routing information, and selecting available path information; and
performing, by the second spine node device, the route advertisement to a leaf node device in the second group according to the available path information, to complete intra-group route advertisement in the second group.

14. The method according to claim 13, wherein the intra-group route advertisement comprises at least one of:
destination prefix information;
route metric/cost information;
node address information of a next-hop spine node device;
group identification information of the second spine node device; and
group identification information to which a leaf node device corresponding to a destination prefix belongs.

15. The method according to claim 13, wherein performing, by the second spine node device, the route advertisement to the leaf node device in the second group according to the available path information comprises:
in response to a plurality of the second spine node devices performing route advertisement of a same target prefix to a same leaf node device, receiving and storing, by the leaf node device, a plurality of pieces of the available path information.

16. The method according to claim 1, wherein, after performing, by the second spine node device, the route advertisement to the second leaf node device in the second group according to the routing information, the method further comprises:
in response to a path state to a destination prefix changing, updating routing information of the second leaf node device in the second group.

17. The method according to claim 16, wherein the path state to the destination prefix changing comprises at least one of:
all forwarding path information of the second spine node device to the destination prefix does not satisfy availability conditions;
the second spine node device has a newly added route advertisement path, and a route metric/cost of the newly added route advertisement path is minimal; and
forwarding path information corresponding to a minimal route metric/cost of the second spine node device is unavailable.

18. The method according to claim 1, wherein, after receiving, by the second spine node device, the routing information from the first spine node device in the first group, the method further comprises:
performing, by the current second spine node device, default route advertisement to the second leaf node device and other spine node devices in the second group, wherein the default route advertisement carries default prefix information, and a next hop indicated by the default prefix information is the second spine node device.

19. The method according to claim 18, wherein, after receiving, by the second spine node device, the routing information from the first spine node device in the first group, the method further comprises:
calculating, by the current second spine node device, routing information on other spine node devices in the second group, and performing prefix route advertisement according to a calculation result.

20. The method according to claim 19, wherein performing the prefix route advertisement according to the calculation result comprises at least one of:
in response to the current second spine node device having a better forwarding path compared with the other spine node devices, performing, by the current second spine node device, prefix route advertisement to the second group, wherein a route metric/cost of the prefix route advertisement is smaller than a route metric/cost of the default route advertisement; and
in response to the other spine node devices having a better forwarding path compared with the current second spine node device, performing, by the current second spine node device, prefix route advertisement to the second group, wherein the prefix route advertisement is used for advertising that a forwarding route whose next hop is the current second spine node device is a non-optimal route or an unreachable route.

21. The method according to claim 19, wherein performing, by the second spine node device, the prefix route advertisement according to the calculation result comprises:
performing, by the second spine node device, positive de-aggregation route advertisement or negative de-aggregation route advertisement through a RIFT protocol according to the calculation result, to implement the prefix route advertisement.

22. A method for packet forwarding, comprising:
receiving, by a leaf node device, a data packet, and determining, according to a destination prefix address in the data packet, whether the data packet is a cross-group data packet; and
in response to the data packet requiring cross-group forwarding, forwarding, by the leaf node device, the data packet to a destination spine node device according to a locally stored forwarding path table entry.

23. The method according to claim 22, wherein forwarding, by the leaf node device, the data packet to the destination spine node device according to the locally stored forwarding path table entry comprises:
determining, by the leaf node device, an address of the destination spine node device according to the locally stored forwarding path table entry; and
determining, by the leaf node device, a forwarding path according to a congestion state of the forwarding path and a route metric/cost, to forward the data packet to the destination spine node device.

24. The method according to claim 23, wherein determining, by the leaf node device, the forwarding path according to the congestion state of the forwarding path and the route metric/cost, to forward the data packet to the destination spine node device comprises:
in response to congestion states of a plurality of forwarding paths being non-congested and route metrics/costs being equal, forwarding the data packet to the destination spine node device in an Equal-Cost Multi-Path (ECMP) manner.

25. The method according to claim 22, wherein, after forwarding, by the leaf node device, the data traffic packet to the destination spine node device according to the locally stored forwarding path table entry, the method further comprises:
confirming, by the destination spine node device, an available forwarding path according to path forwarding information, and forwarding the data packet.

26. The method according to claim 22, wherein, before receiving, by the leaf node device, the data packet, the method further comprises:
acquiring, through pre-configuration or message interaction between leaf node devices of different groups, a correspondence between the data packet and group identification information of a destination group.

27. The method according to claim 22, wherein the leaf node device forwards the data packet to the destination spine node device, wherein the data packet carries group identification information of a destination group.

28. The method according to claim 27, wherein the group identification information is delivered by a control device to the leaf node device and encapsulated in the data packet.

29. The method according to claim 27, wherein the group identification information is encapsulated in an IPv6 extension header or in a reserved field of the data packet.

30. A computer-readable storage medium, having a computer program stored therein, wherein the computer program is configured to, when being executed by a processor, implement the method according to any one of claims 1 to 29.

31. An electronic device, comprising a memory, a processor, and a computer program stored in the memory and executable on the processor, wherein the processor is configured to, when executing the computer program, implement the method according to any one of claims 1 to 29.
